# EUROPEAN PATENT SPECIFICATION

(11) **EP 2 802 152 B1**
(45) Date of publication and mention of the grant of the patent: **05.07.2017**
(21) Application number: 13166771.9
(22) Date of filing: 07.05.2013
(51) Int. Cl.: H04N 21/418, H04N 21/439, H04N 21/4405, H04N 21/4623

(54) **Method for secure processing a stream of encrypted digital audio / video data**
Verfahren zur sicheren Verarbeitung eines Stroms aus verschlüsselten digitalen Audio-/Videodaten
Procédé de traitement sécurisé d'un flux de données audio/vidéo numériques chiffrées

(43) Date of publication of application: 12.11.2014
(73) Proprietor: Nagravision S.A., 1033 Cheseaux-sur-Lausanne (CH)
(72) Inventor: Le Pelerin, Alain, 1020 Renens (CH)
(74) Representative: Leman Consulting S.A.

(56) References cited:
- EP-A1- 2 337 347
- EP-A1- 2 373 019
- US-B1- 6 904 522
- US-B1- 6 973 022
- SHIRAZI H ET AL: "A Cooperative Cellular and Broadcast Conditional Access System for Pay-TV Systems", IEEE TRANSACTIONS ON BROADCASTING, IEEE SERVICE CENTER, PISCATAWAY, NJ, US, vol. 56, no. 1, 1 March 2010 (2010-03-01), pages 44-57, XP011343551, ISSN: 0018-9316, DOI: 10.1109/TBC.2009.2036956

## Description

### Field of the invention

The present invention relates to a method and a system for processing encrypted audio / video digital data in a stream together with control messages. The method and system are applied in particular in the field of Pay-TV.

### Technical background

According to a method well-known in the Pay-TV field, the audio / video data of a broadcast stream is encrypted by a provider by means of encryption keys called control words. This data is transmitted to user units or set top boxes connected to a display or television set. The control words are transmitted to these user units via a stream of control messages often in parallel of the audio / video data stream, each control message comprising at least one control word.

The user units are generally made up of processing units capable to decode the received audio / video data stream by using a security module designed to be to same extent tamperproof, and securely configured to perform cryptographic operations related to the processing of the audio / video data.

A security module may take several distinct forms: a first form includes a microprocessor card, a smart card, or more generally an electronic module (in the form of a key, a badge, a dongle, etc...). This type of security module is generally removable and can be connected to the user unit via electrical contacts and/or a contactless connection interface, for example of ISO 14443 type or NFC type (Near Field Connection) or the like.

A further known form is an integrated circuit placed, often in a irremovable way, in the user unit. An embodiment could comprise a circuit welded on a printed circuit board or a circuit plugged in a connector, such as for example a SIM module connector or the like.

According to a further embodiment, the security module may be integrated into an integrated circuit having also other functions, for example in a descrambling module or in the main microprocessor of a set top box.

In a further embodiment, the security module is not implemented in a particular hardware module, but rather its functionalities are integrated in the form of software only.

When a user unit receives a stream containing the control messages, user access rights are verified by comparing rights stored in the security module with rights contained in the control messages. A successful verification enables extraction of the control word from the control message allowing decryption of the audio video content data. As known, each control word generally allows decryption of a small part of the broadcast encrypted data. Typically, one control word allows decrypting 10 seconds of a Pay-TV program. This time duration, called a cryptoperiod, defines a period after which the control word changes for security reasons.

One notorious method to share with other users an access to encrypted data without being authorized consists of using a genuine user unit, with a real security module, to receive and distribute control words to a set of other non validated or unauthorized user units. This distribution may be performed, for example, via a server or a specific device sometimes called a splitter. When this type of piracy, known sometimes a control word sharing, is implemented, the price related to the access rights acquisition is paid by only a single unit while the audio video content is accessible by several more unauthorized user units.

Document EP1575293A1 describes a method intended to prevent a security module from being shared by several users. According to this method, the security module comprises a memory for storing control message sequences and means for analyzing an abnormal command message sequence by comparison with the stored control messages. When an abnormal sequence is detected, an error counter is incremented. A time delay in the processing of the control words is introduced according to the value of the error counter. The abnormal behavior is defined on the basis of the analysis of the used channels. As for example, if the channel identifier varies alternatively from A to B, the analysis means interprets such a behavior as an abnormal sequence related to security module sharing. The error counter is then incremented. On the contrary, when the channel identifier is A for several cryptoperiods, then passes to B for several further cryptoperiods, the analysis means will not consider this behavior as abnormal and the error counter will not be incremented.

Document US7552457B2 discloses also a method to prevent fraudulent use of control words wherein each time a multimedia unit receives a control message, the unit, or the associated security module, determines to which channel this control message is related. The channel identifiers are stored together with a time information. The messages are compared in order to determine if they are related to different channels or to the same channel. If they are related to different channels, a counter is incremented by a given value. If the control messages are related to the same channel, the counter is decremented. If the counter reaches a predetermined threshold value, this means that many channel changes have occurred and control words decrypting is stopped.

The processes described in the documents EP1575293A1 and US7552457B2 imply that an identifier of the channel concerned for each control message is necessary. Certain configurations do not require the channel identifier, in particular by using the control messages as defined in the Eurocrypt N° EN 50094 standard of December 1992, it is possible to identify a class of channels rather than each individual channel. In this case, the above described processes do not allow blocking the use of several multimedia units operating with only one security module and a splitter.

As is well-known, control messages are typically repeated according to very short time intervals, for example 50 ms. The aim of this is to make the control word necessary for access to the contents rapidly available when channel changing or zapping. When a user unit has received a control message, it typically filters the identical messages in such a way that the control messages are only forwarded to the security module once. A difficulty arises when the control messages contain more than one control word. In practice, two control words are often sent per control message. The advantage approach in the typical systems described lies in the fact that while one of the control words is used, the other is decrypted and memorized. This scheme thus allows using safer decrypting algorithms.

In such a case, it is possible for a fraudulent user to use only one control message of two, then to transmit the unused message to another user unit or processing device. In this way, each user unit receives all the required control words. Therefore, several processing units can allow access to encrypted content while in theory only one subscriber is authorized. This type of fraud is particularly difficult to detect since it is impossible, without using a channel identifier, to distinguish a normal use of all control messages by only one user unit from fraudulent use by two different user units of one control message.

Document EP2337347A1 relates to a method for secure processing access controlled audio/video data by a processing unit comprising a first conditional access device connected to a second conditional access device provided with a descrambler and a secured processor. The method is based on access conditions verification performed by two conditional access devices consecutively on a control message before releasing a control word and forwarding it to a descrambler. The control message is structured so that it encapsulates another control message. The processing unit is configured for receiving control messages comprising at least a first part containing first access conditions and a second part structured as a control message containing second access conditions and a control word. The control message and the second part are each encrypted and accompanied by respectively first and second authentication data. The first conditional access device decrypts and verifies integrity of the control message, verifies the first access conditions and transmits the second part of the control message to the second access control device when the verification of the first access conditions is successful. The second conditional access device decrypts and verifies integrity of the second part and further verifies the second access conditions, releases and loads the control word into the descrambler when the verification of the second access conditions is successful. The descrambler descrambles the audio/video data with the control word and forwards said data in clear to an appropriate output of the processing unit.

In this case the two conditional access devices operate sequentially one after the other i.e. in series. The control message needs to be verified and processed by the first conditional access device before transmitting the second part structured as another control message to the second conditional access device. After verification, this second conditional access device extracts the control word from the second part. The access controlled audio/video data are processed by two conditional access devices consecutively. The security of the control word is thus reinforced and efficiency and speed of the control message verification is increased.

Document EP2373019A1 discloses a method to prevent control word sharing by using advanced features of a security module rendering fastidious the capture of control words by hackers. The method ensures a secure descrambling of a scrambled audio/video stream by a receiver provided with a chip set connected to a security module. The security module receives seed data encrypted by a transport key. The scrambled audio/video stream is organized in packets having a packet header and a payload. The chip set receives and buffers all or part of the packet payload. The packet header is extracted by the chip set and forwarded to the security module. The security module generates a key stream from the seed data and the header and forwards the key stream to the chip set via a high speed channel. The chip set applies a mixing function between the key stream and the packet payload in order to obtain a descrambled packet payload. The packet header and the descrambled packet payload are assembled by the chip set and output as a descrambled audio/video stream. The access control data in form of the seed data cannot be easily extracted from the key stream flowing between the security module and the chipset because of the high throughput. This transmission mode which throughput is equivalent or larger than the one of the input scrambled audio/video data transport stream renders capture of these control words or data much more difficult than in standard transmission mode at low throughput.

Document US6973022B1 discloses a digital broadcasting receiver unit which is able to detect the card module as the second unit which is illegally connected to the receiver unit main body as the first unit, and then disconnect functionally the illegal second unit from the first unit by switching the signals via a switch to bypass the second unit being illegally connected, to thus prevent the unfair practice as well as the large influence upon the overall receiver unit. The digital broadcasting receiver unit may comprise a receiver unit main body and two sheets of card modules. As an interface standard between the receiver unit main body and the card modules, a common interface standard may be employed. The receiver unit main body includes an input terminal for receiving the broadcasting signals such as the satellite broadcasting, the cable television broadcasting, etc.; a tuner/demodulator circuit for receiving the broadcast over a desired channel; an error correction circuit for correcting the transmission error; switches for switching an internal signal of the receiver unit main body and output signals of the card modules; a demultiplexer circuit for extracting a video packet and a sound packet over the desired channel from a plurality of program transport packets which are time-division multiplexed; a video/sound decoder circuit for decoding the digitally compressed video and sound signals respectively; a video/sound output circuit for digital/analogue-converting the video and sound signals respectively and then amplifying them up to a predetermined level; card detector circuits for detecting respectively whether or not the card module is inserted into the corresponding slot; a card control circuit for executing the control for the card modules; and a control circuit for controlling the overall receiving unit. The card modules include a signal processor circuit as a multiplexed text broadcasting processor circuit, a signal processor circuit as a descrambler; attribute information memory portions; and control circuits respectively.

Document US6904522B1 discloses a method for providing secure communication of information between at least a first and second digital audiovisual device. The second device receives a certificate comprising a transport public key encrypted by a management private key, the second device decrypting the certificate using an equivalent management public key and thereafter using the transport public key to encrypt information sent to the first device, the first device using an equivalent private key to decrypt the information. In such a method, the first device can assume the role of a master device, personalized with a certificate generated using a management private key. The second device can assume the role of a slave device. Information encrypted by the transport public key held by the second device may only be decrypted by the equivalent private key held by the first device. In normal operation, the slave decoder and card receive a scrambled transmission together with the encrypted ECM messages containing the control word information necessary to descramble the transmission. These ECM messages are passed via an IEEE 1394 link to the master decoder and card. Alternatively, the ECM messages for a transmission that will be displayed via the slave decoder may be received directly by the master decoder and card. The card then carries out a standard verification step to check that one or both of the decoders have the rights to access this transmission. In the event that the decoders do not have the necessary rights a "non-valid" message is returned to the decoder and card and the process stops. Assuming the subscriber possesses the necessary rights, the ECM message containing the encrypted control word CW is then decrypted using the monthly exploitation key associated with the system manager or operator. The clear value of the control word is then re-encrypted using the previously obtained session key.

Document "A cooperative cellular and broadcast conditional access system for pay-TV systems", Shirazi et al, IEEE service center, discloses a pay-TV system using a Mobile Integrated Conditional Access System (MICAS). A service provider needs to provide the MICAS services on new type of set-top boxes and sign an agreement with mobile phone operators to use their SIM cards. The set-top box identity can be used by the service provider to authenticate the set-top box and identify the model and specifications of the set-top box. The viewer on the other hand has to set up his TV services access point in order to benefit from the services offered in the MICAS. Given that the set-top box is receiving the encoded streams, the viewer can subscribe to any available services using an arbitrary set-top box and his mobile phone. The corresponding service provider will manage the subscriber's account and provide him with a proper mechanism to decode the paid contents.

The above cited documents EP2337347A1, US6973022B1, US6973022B1, US6904522B1 and the document "A cooperative cellular and broadcast conditional access system for pay-TV systems", Shirazi et al describe methods and systems where the video data and the audio data of an input audio/video content stream are descrambled together with the control word extracted from ECM control messages. A capture of the control word and its sharing with other processing units may allow non-paying users to benefit illegally from protected audio/video content. There is still an issue to prevent control word sharing piracy in an efficient way without engaging heavy and costly security means.

### Summary of the invention

An aim of the invention is to prevent, decrease or deter control words sharing piracy, in which content is stolen by extracting the control words from a processing unit and making them available to other non-paying users via Internet for example. These users benefit thus from clear control words for descrambling audio / video data by connecting their processing unit to the Internet.

The aim is achieved by a method for processing a digital audio/video data stream according to claim 1.

A further object of the invention consists of a system for processing a digital audio/video data stream according to claim 12.

The present disclosure provides an innovative solution to the problem of control word sharing piracy. Even the control word used for descrambling the video content is shared; the corresponding audio content cannot be descrambled with the shared control word. The disclosed method and system for processing a digital audio/video data stream dissuades hackers from capturing control words which will be useless since the audio content associated with the video content can not be easily decrypted.

According to a preferred embodiment, the video data descrambling by the control word and the decryption of the audio data are conditioned by the availability of the suitable user rights stored in the primary respectively in the secondary secure device.

In this embodiment, rights verification is performed initially before the primary secure device obtains the control word and additionally before the secondary secure device decrypts the audio data.

Thanks to the particular non standard secrete encryption of the audio content data; sharing control words for video content data decryption without corresponding audio content data becomes a less interesting piracy alternative. In fact, because it remains very difficult for a user to get the suitable audio content data from an alternative source and to synchronize this audio data with illegally obtained video data without errors, the systems and methods discussed are believed to be efficacious. Furthermore, the watermarking of the audio data allows tracking the origin of these data in case of redistribution of the decrypted audio data taken from the output of the secondary secure device.

In order to protect the watermarked audio data at the output of the secondary secure device, they may be re-encrypted by the secondary secure device with a key specific to the receiver which will decrypt the re-encrypted watermarked audio data before outputting to the display device.

### Brief description of the figures

The invention will be better understood with the following detailed description, which refers to the attached figures given as non-limitative examples.

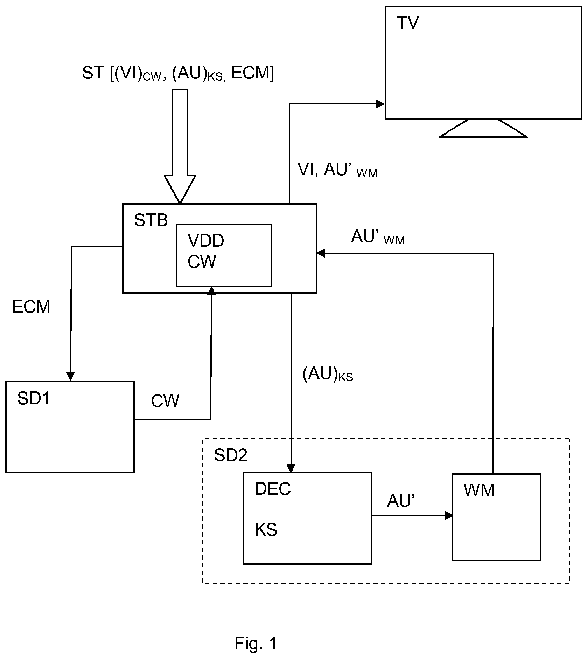

Figure 1 shows a block diagram of an embodiment of the invention comprising a receiver to which are coupled a primary and a secondary secure device. The primary secure device contributes to video content data descrambling while the secondary secure device decrypts the audio content data by using a secrete system key and algorithm before adding a watermark to the audio content data.

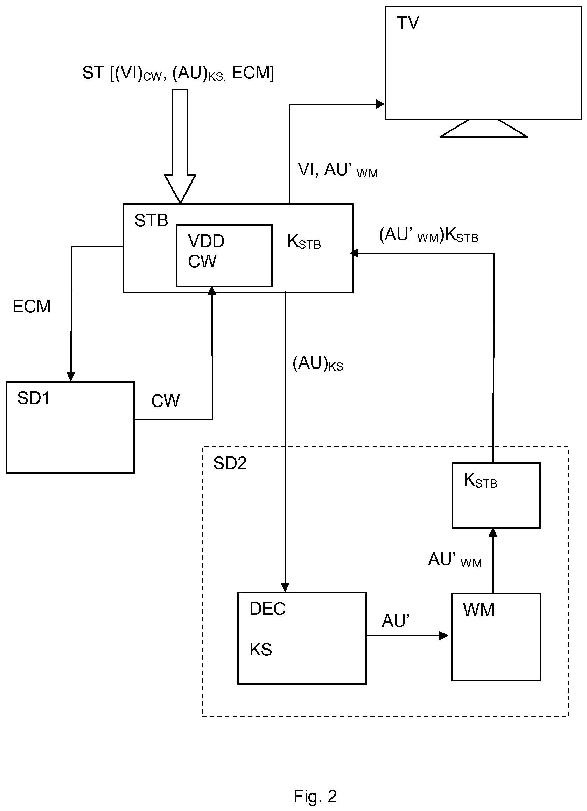

Figure 2 shows a block diagram of an embodiment of the system illustrated by figure 1 where the watermarked audio content data are re-encrypted by the secondary secure device with a key specific to the receiver. The re-encrypted watermarked audio content data are decrypted by the receiver before outputting to a display device.

### Detailed description of the invention

The receiver STB of the system may take several forms such as a set top box connected to a television set or other display, a hardware and software module integrated in the television set, a home gateway (with or without transcoding or display capabilities), a personal computer, a smartphone, a tablet, or any other apparatus capable to receive a digital audio / video content data stream ST for processing and displaying to a user. The receiver STB is configured to decrypt audio/video data from streams provided by one or more of sources, such as a terrestrial transmitter, a satellite, an internet server, a cable network or a wireless network, etc.

In figure 1, a receiver STB is coupled, for example locally connected to a primary and secondary secure device (SD1, SD2) which may also take different forms such as a removable electronic module like a smartcard, a key, a badge, a dongle, etc, a fixed integrated circuit welded on the mother board of the receiver, a module integrated into a circuit having other functions (main processor, descrambler etc.) or pieces of software only (that are embedded for example, in receiver's firmware). The secure devices (SD1, SD2) may have each a different form or both a same form and located at different places or at a same place in relation to the receiver STB.

For example, a single physical device may be plugged to the receiver, such as a CAM (Conditional Access Module), which in this example can support two smartcards, a descrambler module and memories. The CAM module may include a standardized removable housing including card readers and a connector compatible with an interface of the receiver. Document WO2012/022712A1 describes a typical CAM module having a reader for credit card shaped cards, a reader for SIM card shaped cards, a slot for a SD memory card and a descrambler module implemented on a printed circuit board located inside the CAM module.

As illustrated by figure 1, digital data stream ST, comprising scrambled video content data (VI)_{CW}, audio content data (AU)_{KS} encrypted with a system key KS and control messages ECM, generally encrypted with a transport key known by the primary secure device SD1, enters into a receiver STB. According to an embodiment, the digital data stream ST may be provided, via a bidirectional network or Internet, by a server as for example by a VOD (Video On Demand) server or a television program replay server (catch up TV).

The receiver STB forwards the control message ECM to the primary secure device SD1 which decrypts it with the transport key before extracting the control word CW necessary for descrambling the video content data (VI)_{CW}. According to a preferred configuration, the control word CW is extracted from the control message ECM only after successful verification of access rights by the secure device SD1.

A control message ECM, comprises, in addition to the control word CW, access conditions appearing in general in form of rights necessary to the user for accessing one or more audio / video data streams which may be broadcast streams. These rights consist of codes, which indicate a subscription, an authorization for accessing an event or broadcast program content or a validity period of the access, etc. In a preferred embodiment, the primary secure device SD1 operates with a software piece CAK (Conditional Access Kernel) configured to verify the access conditions received from the control message ECM by using an access rights database stored in a memory of the receiver STB or according to an embodiment in a memory of the primary secure device SD1. The access conditions are thus compared with the access rights retrieved from the right database. Once this verification is successfully executed, i.e. the stored rights match with the received access conditions, the control word CW is decrypted and released by the primary secure device SD1 which transmits it to the video descrambler device VDD of the receiver STB.

In parallel to descrambling the video content data VI with the control word CW and the first algorithm A1, the receiver STB forwards the encrypted audio content data (AU)_{KS} to the secondary secure device SD2. Contrary to the video content data VI, the audio content data AU are encrypted with a secrete system key KS by using a non-standard algorithm or a specific secrete algorithm A2 known only by the secondary secure device SD2. Unlike the control word CW and the first algorithm A1, the system key KS and the algorithm A2 are qualified as secrete i.e. they do not belong to any standard and are not described in public documents.

A decryption module DEC decrypts the audio content data AU to obtain decrypted audio data AU' which will be forwarded to a watermarking module WM which adds a watermark to the audio data AU' before transmitting them to the receiver STB.

Watermarking is a technique used to tag protected content in order to detect unauthorized use or illegal copies of the protected content. The watermarking technique consists of embedding a digital mark into the content. The mark may be transmitted according to a visible or an invisible mode. This digital mark could be a unique value or a generic symbol depending on what the content owner or the operator wants to monitor. In the case of the invention, the mark is transmitted in an invisible respectively in an inaudible mode and preferably contains at least an identifier specific to the system producing the watermark. For example, the watermark includes a unique identifier of the secondary secure device SD2 and/or of the receiver STB allowing efficient tracking illegal copies of audio / video content.

As obtaining the control word CW is preferably performed under the condition the access rights have been successfully verified, the decryption of the audio content data AU may also be performed only after a successful verification of the access rights by the secondary secure device SD2. In this case, the access conditions extracted from the control message ECM are forwarded by the receiver with the encrypted audio content data (AU)_{KS} to the secondary secure device SD2. The verification is made by the secondary secure device SD2 in a similar way than by the primary secure device SD1 by comparing the access conditions with rights retrieved from the rights database stored in a memory of the receiver STB or of the secondary secure device SD2.

The access conditions extracted from the control message ECM may be verified by the primary secure device SD1 only or by both the primary and the secondary secure device (SD1, SD2).

The primary and the secondary secure device (SD1, SD2) may be of different type or technology so that access conditions verified with the rights of the primary secure device SD1 are not compatible with the rights of the secondary secure device SD2. In this case the control message ECM may contain distinct access conditions, one for the video content data VI and one for the audio content data AU.

According to an embodiment, the receiver STB may convert the access conditions extracted from the control message ECM which are acceptable by the primary secure device SD1 into a format acceptable by the secondary secure device SD2.

The system key KS for decrypting the audio content data AU may be provided to the secondary secure device SD2 by several ways as for example:
a) By control messages ECM transmitted in the input digital data stream ST. Instead of control words CW, some control messages ECM may contain the system key KS or necessary information for generating the system key KS by the secondary secure device SD2. This information may include an address of a memory of the secondary secure device SD2 where the system key KS is located or instructions for a key generator program installed in the secondary secure device SD2 or any other suitable parameters allowing calculating the system key KS.
   These particular control messages, ignored by the primary secure device SD1, can be processed only by the secondary secure device SD2 for obtaining the system key KS. According to an embodiment, a same control message ECM may contain the control word CW and the system key KS or the information for generating the system key. In this case the control message ECM is forwarded by the receiver to both secures devices SD1 and SD2 for extracting respectively the control word CW and the system key KS.
   Information or parameters concerning the second secrete decryption algorithm A2 may also be included in the control message ECM such as for example a reference allowing the secondary secure device SD2 selecting the suitable secrete algorithm A2 among a set of algorithms pre-stored in a memory of the secondary secure device SD2.
b) By management messages EMM transmitted in the input digital data stream ST and forwarded by the receiver STB to the primary and the secondary secure device (SD1, SD2) foreseen to update the access rights. Regarding the secondary secure device SD2, the management message EMM may provide, in addition to rights updates, the system key KS or necessary information for generating this system key KS by the secondary secure device SD2. Information or parameters concerning the second secrete decryption algorithm A2 may also be included in the management message EMM such as for example a reference allowing the secondary secure device SD2 selecting the suitable secrete algorithm A2 among a set of pre-stored algorithms.
c) The system key KS and the second secrete decryption algorithm A2 may be embedded in the secondary secure device SD2 at manufacturing of the device SD2 during a personalization phase. In this case the system key KS and the second secrete decryption algorithm A2 remain the same until a change of the secondary device SD2 for example when the user of the receiver changes the operator or service provider.

According to a further embodiment represented by figure 2, the watermarked decrypted audio content data AU'_{WM} are re-encrypted by the secondary secure device SD2 with a unique key K_{STB} and algorithm known only by a given receiver STB. In such a way, the security of the audio content data AU is reinforced by limiting normal operations re-distribution of the watermarked decrypted audio content data AU'_{WM} to other receivers.

The unique key K_{STB} may be determined based on identifiers of the secondary secure device SD2 and of the receiver STB during first connection of the receiver STB to the secondary secure device SD2 where the key K_{STB} stored either in a memory of the receiver STB or in a memory of the secondary secure device SD2 is mutually exchanged. Once the key K_{STB} is stored at both receiver and secure device side, the watermarked decrypted audio content data AU'_{WM} provided by the secure device SD2 are re-encrypted, cf. pairing process described in patent EP1078524B1.

## Claims

1. Method for processing a digital data stream (ST) comprising video content data (VI)_{CW} scrambled with a first algorithm (A1) using at least one control word (CW), audio content data (AU)_{KS} encrypted with a secrete second algorithm (A2) using a system key (KS) and said digital data stream (ST) further comprising encrypted control messages (ECM) comprising at least one of the control words (CW), the digital data stream (ST) entering into a receiver (STB) comprising a video descrambler device (VDD), the receiver (STB) being coupled to a primary secure device (SD1) and a secondary secure device (SD2), the method comprising steps of:
- extracting by the receiver (STB) a control message (ECM) from the digital data stream (ST),
- transmitting to the primary secure device (SD1) the extracted control message (ECM), the primary secure device (SD1):
- decrypting the control message (ECM),
- obtaining the control word (CW) from the control message (ECM) and
- transmitting the control word (CW) to the receiver (STB),
- descrambling the video content data (VI)_{CW} with the first algorithm (A1) by using the control word (CW),
the method is **characterized in that** it further comprise steps of
- transmitting to the secondary secure device (SD2) the encrypted audio content data (AU)_{KS}, the secondary secure device (SD2) :
- decrypting the audio content data (AU)_{KS} with the secrete second algorithm (A2) by using the system key (KS), the secrete second algorithm (A2) and the system key (KS) being previously implemented in the secondary secure device (SD2),
- adding a watermark (WM) on the decrypted audio content data (AU') and
- returning the watermarked decrypted audio content data (AU'_{WM}) to the receiver (STB),
- outputting by the receiver (STB) the descrambled video content data (VI) and the watermarked decrypted audio content data (AU'_{WM}) to a display device (TV).

2. Method according to claim 1 **characterized in that** the control message (ECM) comprises access conditions in addition to the control word (CW), the primary secure device (SD1) verifies the access conditions received from the control message (ECM) by comparing the access conditions with access rights retrieved from an access rights database stored in a memory of the receiver (STB) or in a memory of the primary secure device (SD1), the control word (CW) being obtained at a successful verification of the access conditions.

3. Method according to claim 1 or 2 **characterized in that** the secondary secure device (SD2) verifies the access conditions forwarded by the receiver (STB) by comparing the access conditions with access rights retrieved from an access rights database stored in a memory of the receiver (STB) or in a memory of the secondary secure device (SD2), the encrypted audio content data (AU)_{KS} being decrypted at a successful verification of the access conditions.

4. Method according to claim 3 **characterized in that** the control message (ECM) comprises distinct access conditions for the video content data (VI) and for the audio content data (AU).

5. Method according to claim 3 **characterized in that** the receiver (STB) converts the access conditions received from the control message (ECM) into a format acceptable by the secondary secure device (SD2) before forwarding to the secondary secure device (SD2).

6. Method according to anyone of claim 1 to 5 **characterized in that** the digital data stream (ST) comprises control messages (ECM) containing the system key (KS) or necessary information for generating the system key (KS) by the secondary secure device (SD2), the control messages (ECM), ignored by the primary secure device (SD1), being processed only by the secondary secure device (SD2) for obtaining the system key (KS).

7. Method according to anyone of claim 1 to 5 **characterized in that** the digital data stream (ST) comprises control messages (ECM) containing the control word (CW) and the system key (KS) or information for generating the system key (KS), the control message (ECM) being forwarded by the receiver (STB) to both secures devices (SD1, SD2) for extracting respectively the control word (CW) and the system key (KS).

8. Method according to anyone of claim 1 to 5 **characterized in that** the digital data stream (ST) comprises management messages (EMM) providing, in addition to rights updates, the system key (KS) to the secondary secure device (SD2) or necessary information for generating the system key (KS), and information or parameters concerning the second secrete decryption algorithm (A2).

9. Method according to anyone of claim 1 to 5 **characterized in that** the system key (KS) and the second secrete decryption algorithm (A2) are embedded in the secondary secure device (SD2) at manufacturing of the device (SD2) during a personalization phase.

10. Method according to anyone of claim 1 to 9 **characterized in that** the watermarked decrypted audio content data (AU'_{WM}) are re-encrypted by the secondary secure device (SD2) with a unique key (K_{STB}) and algorithm known only by a given receiver (STB), the re-encrypted watermarked decrypted audio content data (AU'_{WM})K_{STB} being returned to the receiver (STB) by the secondary secure device (SD2).

11. Method according to claim 10 **characterized in that** the unique key (K_{STB}) may be determined based on identifiers of the secondary secure device (SD2) and of the receiver (STB) during first connection of the receiver (STB) to the secondary secure device (SD2) where the key (K_{STB}) stored either in a memory of the receiver (STB) or in a memory of the secondary secure device (SD2) is mutually exchanged.

12. System for processing a digital data stream (ST), the system comprising a receiver (STB) having a video descrambler device (VDD), the receiver (STB) being coupled to a primary secure device (SD1) and a secondary secure device (SD2), the digital data stream (ST) comprising video content data (VI) scrambled with a first algorithm (A1) using a control word (CW), audio content data (AU) encrypted with a secrete second algorithm (A2) using a system key (KS) and related encrypted control messages (ECM) comprising the control word (CW),
the receiver (STB) is configured to receive the digital data stream (ST) and to extract a control message (ECM) from said digital data stream (ST) and to transmit to the primary secure device (SD1) the extracted control message (ECM),
the primary secure device (SD1) is configured to decrypt the control message (ECM) and to obtain the control word (CW) from the control message (ECM), and to transmit the control word (CW) to the video descrambler device (VDD) of the receiver (STB),
the system is **characterized in that**
the secondary secure device (SD2) being configured to receive the encrypted audio content data (AU)_{KS} from the receiver (STB) comprises a decryption device (DEC) configured to decrypt the audio content data (AU) with the secrete second algorithm (A2) by using the system key (KS) previously implemented in the secondary secure device (SD2) and a watermarking module (WM) configured to add a watermark to the decrypted audio content data (AU') and to return the watermarked decrypted audio content data AU'_{WM} to the receiver (STB), the receiver (STB) being further configured to output to a display device (TV) the descrambled video content data (VI) and the watermarked decrypted audio content data AU'_{WM} provided by the secondary secure device (SD2).

13. System according to claim 12 **characterized in that** the control message (ECM) comprises access conditions in addition to the control word (CW), the primary secure device (SD1) is further configured to verify the access conditions received from the control message (ECM) by comparing the access conditions with access rights retrieved from an access rights database stored in a memory of the receiver (STB) or in a memory of the primary secure device (SD1), the control word (CW) being obtained at a successful verification of the access conditions.

14. System according to claim 12 or 13 **characterized in that** the secondary secure device (SD2) is further configured to verify the access conditions forwarded by the receiver (STB) by comparing the access conditions with access rights retrieved from an access rights database stored in a memory of the receiver (STB) or in a memory of the secondary secure device (SD2), the encrypted audio content data (AU)_{KS} being decrypted at a successful verification of the access conditions.

15. System according to claim 12, **characterized in that** the primary and the secondary secure device (SD1, SD2) are in form of smartcards implemented on a single physical security device called conditional access module (CAM) locally connected to the receiver (STB).

## Patentansprüche

1. Verfahren zur Verarbeitung eines digitalen Datenstroms (ST) mit Videoinhaltsdaten (VI)_{CW}, verschlüsselt mit einem ersten Algorithmus (A1) unter Verwendung mindestens eines Kontrollworts (CW), Audioinhaltsdaten (AU)_{KS}, verschlüsselt mit einem geheimen zweiten Algorithmus (A2), unter Verwendung eines Systemschlüssels (KS), und besagter digitale Datenstrom (ST) umfasst des Weiteren verschlüsselte Kontrollmeldungen (ECM) mit mindestens einem der Kontrollwörter (CW), der digitale Datenstrom (ST) tritt in einen Empfänger (STB), der eine Videodescramblervorrichtung (VDD) umfasst, wobei der Empfänger (STB) mit einer primären sicheren Vorrichtung (SD1) und einer sekundären sicheren Vorrichtung (SD2) verbunden ist, wobei das Verfahren folgende Phasen umfasst:
- Extrahieren, durch den Empfänger (STB), einer Entitlement Control Message (ECM) aus dem digitalen Datenstrom (ST),
- Übertragung der extrahierten Entitlement Control Message (ECM) an die primäre sichere Vorrichtung (SD1), worauf dieses:
- die Entitlement Control Message (ECM) entschlüsselt,
- das Kontrollwort (CW) aus der Entitlement Control Message (ECM) erhält, und
- das Kontrollwort (CW) an den Empfänger (STB) überträgt,
- Entschlüsselung der Videoinhaltsdaten (VI)_{CW} mit dem ersten Algorithmus (A1) unter Verwendung des Kontrollworts (CW),
wobei das Verfahren **dadurch gekennzeichnet ist, dass** es des Weiteren folgende Phasen umfasst:
- Übertragung der verschlüsselten Audioinhaltsdaten (AU)_{KS} an die sekundäre sichere Vorrichtung (SD2), worauf dieses:
- die Audioinhaltsdaten (AU)_{KS} mit dem geheimen zweiten Algorithmus (A2) entschlüsselt, unter Verwendung des Systemschlüssels (KS), wobei der geheime zweite Algorithmus (A2) und der Systemschlüssel (KS) vorher in der sekundären sicheren Vorrichtung (SD2) implementiert werden,
- ein Wasserzeichen (WM) auf die entschlüsselten Audioinhaltsdaten (AU') hinzufügt, und
- die entschlüsselten mit einem Wasserzeichen versehenen Audioinhaltsdaten (AU'_{WM}) an den Empfänger (STB) zurücksendet,
- Ausgabe, durch den Empfänger (STB), der entschlüsselten Videoinhaltsdaten (VI) und der entschlüsselten, mit einem Wasserzeichen versehenen Audioinhaltsdaten (AU'_{WM}) auf einer Anzeige Vorrichtung (TV).

2. Verfahren nach Anspruch 1, **dadurch gekennzeichnet, dass** die Entitlement Control Message (ECM) zusätzlich zu dem Kontrollwort (CW) Zugangsbedingungen umfasst, wobei die primäre sichere Vorrichtung (SD1) die Zugangsbedingungen überprüft, die von der Entitlement Control Message (ECM) empfangen wurden, durch Vergleich der Zugangsbedingungen mit Zugangsberechtigungen, die von einer Zugangsberechtigungs-Datenbank abgerufen werden, gespeichert in einem Speicher des Empfängers (STB) oder in einem Speicher der primären sicheren Vorrichtung (SD1), wobei das Kontrollwort (CW) bei einer erfolgreichen Überprüfung der Zugangsbedingungen erhalten wird.

3. Verfahren nach Anspruch 1 oder 2, **dadurch gekennzeichnet, dass** die sekundäre sichere Vorrichtung (SD2) die Zugangsbedingungen überprüft, die von dem Empfänger (STB) weitergeleitet wurden, durch Vergleichen der Zugangsbedingungen mit Zugangsberechtigungen, die aus einer Zugangsberechtigungs-Datenbank abgerufen wurden, gespeichert in einem Speicher des Empfängers (STB) oder in einem Speicher der sekundären sicheren Vorrichtung (SD2), wobei die verschlüsselten Audioinhaltsdaten (AU)_{KS} bei einer erfolgreichen Überprüfung der Zugangsbedingungen entschlüsselt werden.

4. Verfahren nach Anspruch 3 **dadurch gekennzeichnet, dass** die Entitlement Control Message (ECM) verschiedene Zugangsbedingungen für die Videoinhaltsdaten (VI) und für die Audioinhaltsdaten (AU) umfasst.

5. Verfahren nach Anspruch 3, **dadurch gekennzeichnet, dass** der Empfänger (STB) die Zugangsbedingungen, die er von der Entitlement Control Message (ECM) empfangen hat, in ein Format konvertiert, das für die sekundäre sichere Vorrichtung (SD2) akzeptabel ist, vor der Weiterleitung an die sekundäre sichere Vorrichtung (SD2).

6. Verfahren nach einem beliebigen der Ansprüche 1 bis 5, **dadurch gekennzeichnet, dass** der digitale Datenstrom (ST) Kontrollmeldungen (ECM) umfasst, die den Systemschlüssel (KS) enthalten oder notwendige Informationen zur Erzeugung des Systemschlüssels (KS) durch die sekundäre sichere Vorrichtung (SD2), wobei die Kontrollmeldungen (ECM), die von der primären sicheren Vorrichtung (SD1) ignoriert wurden, nur von der sekundären sicheren Vorrichtung (SD2) verarbeitet werden, um den Systemschlüssel (KS) zu erhalten.

7. Verfahren nach einem beliebigen der Ansprüche 1 bis 5, **dadurch gekennzeichnet, dass** der digitale Datenstrom (ST) Kontrollmeldungen (ECM) umfasst, die das Kontrollwort (CW) und den Systemschlüssel (KS) enthalten oder Informationen zur Erzeugung des Systemschlüssels (KS), wobei die Entitlement Control Message (ECM) von dem Empfänger (STB) an beide sicheren Vorrichtungen (SD1, SD2) weitergeleitet wird, zum Extrahieren des Kontrollworts (CW) bzw. des Systemschlüssels (KS).

8. Verfahren nach einem beliebigen der Ansprüche 1 bis 5, **dadurch gekennzeichnet, dass** der digitale Datenstrom (ST) Verwaltungsnachrichten (EMM) umfasst und, zusätzlich zu Berechtigungs-Aktualisierungen, den Systemschlüssel (KS) an die sekundäre sichere Vorrichtung (SD2) liefert, oder notwendige Informationen zur Erzeugung des Systemschlüssels (KS), und Informationen oder Parameter bezüglich des zweiten geheimen Entschlüsselungsalgorithmus (A2).

9. Verfahren nach einem beliebigen der Ansprüche 1 bis 5, **dadurch gekennzeichnet, dass** der Systemschlüssel (KS) und der zweite geheime Entschlüsselungsalgorithmus (A2) in der sekundären sicheren Vorrichtung (SD2) bei der Herstellung der Vorrichtung (SD2) während einer Personalisierungsphase eingebettet werden.

10. Verfahren nach einem beliebigen der Ansprüche 1 bis 9, **dadurch gekennzeichnet, dass** die entschlüsselten, mit einem Wasserzeichen versehenen Audioinhaltsdaten (AU'_{WM}) von der sekundären sicheren Vorrichtung (SD2) mit einem eindeutigen Schlüssel (K_{STB}) und Algorithmus neu-verschlüsselt werden, die nur einem gegebenen Empfänger (STB) bekannt sind, wobei die neu-verschlüsselten entschlüsselten mit einem Wasserzeichen versehenen Audioinhaltsdaten (AU'_{WM})K_{STB} von der sekundären sicheren Vorrichtung (SD2) an den Empfänger (STB) zurückgesandt werden.

11. Verfahren nach Anspruch 10, **dadurch gekennzeichnet, dass** der eindeutige Schlüssel (K_{STB}) auf der Grundlage von Kennungen der sekundären sicheren Vorrichtung (SD2) und des Empfängers (STB) während der ersten Verbindung des Empfängers (STB) mit der sekundären sicheren Vorrichtung (SD2) festgelegt werden kann, wo der Schlüssel (K_{STB}), der entweder in einem Speicher des Empfängers (STB) oder in einem Speicher der sekundären sicheren Vorrichtung (SD2) gespeichert ist, gegenseitig ausgetauscht wird.

12. System zur Verarbeitung eines digitalen Datenstroms (ST), mit einem Empfänger (STB), der eine Videodescramblervorrichtung (VDD) umfasst, wobei der Empfänger (STB) mit einer primären sicheren Vorrichtung (SD1) und einer sekundären sicheren Vorrichtung (SD2) verbunden ist, wobei der digitale Datenstrom (ST), der Videoinhaltsdaten (VI) umfasst, mit einem ersten Algorithmus (A1) unter Verwendung eines Kontrollworts (CW) verschlüsselt wird, wobei Audioinhaltsdaten (AU) mit einem geheimen zweiten Algorithmus (A2) unter Verwendung eines Systemschlüssels (KS) verschlüsselt werden und dazugehörige verschlüsselte Kontrollmeldungen (ECM) das Kontrollwort (CW) umfassen,
wobei der Empfänger (STB) konfiguriert ist, um den digitalen Datenstrom (ST) zu empfangen und eine Entitlement Control Message (ECM) aus dem digitalen Datenstrom (ST) zu extrahieren und an die primäre sichere Vorrichtung (SD1) zu übertragen,
wobei die primäre sichere Vorrichtung (SD1) konfiguriert ist, um die Entitlement Control Message (ECM) zu entschlüsseln und das Kontrollwort (CW) aus der Entitlement Control Message (ECM) zu erhalten und das Kontrollwort (CW) an die Videodescramblervorrichtung (VDD) des Empfängers (STB) zu übertragen,
wobei das System **dadurch gekennzeichnet ist, dass**
die sekundäre sichere Vorrichtung (SD2), das konfiguriert ist, um die verschlüsselten Audioinhaltsdaten (AU)_{KS} von dem Empfänger (STB) zu empfangen, eine Entschlüsselungsvorrichtung (DEC) umfasst, die konfiguriert ist, um die Audioinhaltsdaten (AU) mit dem geheimen zweiten Algorithmus (A2) zu entschlüsseln, unter Verwendung des Systemschlüssels (KS), der vorher in der sekundären sicheren Vorrichtung (SD2) implementiert wurde, und ein Wasserzeichenmarkierungs-Modul (WM), das konfiguriert ist, um ein Wasserzeichen zu den entschlüsselten Audioinhaltsdaten (AU') hinzuzufügen, und die entschlüsselten mit einem Wasserzeichen versehenen Audioinhaltsdaten AU'WM an den Empfänger (STB) zurückzusenden, wobei der Empfänger (STB) des weiteren zur Ausgabe auf einer Anzeige Vorrichtung (TV) der entschlüsselten Videoinhaltsdaten (VI) und der entschlüsselten mit einem Wasserzeichen versehenen Audioinhaltsdaten AU'_{WM} konfiguriert ist, die von der sekundären sicheren Vorrichtung (SD2) geliefert werden.

13. System nach Anspruch 12, **dadurch gekennzeichnet, dass** die Entitlement Control Message (ECM) zusätzlich zu dem Kontrollwort (CW) Zugangsbedingungen umfasst, wobei die primäre sichere Vorrichtung (SD1) des Weiteren konfiguriert ist, um die Zugangsbedingungen zu überprüfen, die von der Entitlement Control Message (ECM) empfangen wurden, durch Vergleich der Zugangsbedingungen mit Zugangsberechtigungen, die aus einer Zugangsberechtigungs-Datenbank abgerufen wurden, gespeichert in einem Speicher des Empfängers (STB) oder in einem Speicher der primären sicheren Vorrichtung (SD1), wobei das Kontrollwort (CW) bei einer erfolgreichen Überprüfung der Zugangsbedingungen erhalten wird.

14. System nach Anspruch 12 oder 13, **dadurch gekennzeichnet, dass** die sekundäre sichere Vorrichtung (SD2) des Weiteren konfiguriert ist, um die Zugangsbedingungen zu überprüfen, die von dem Empfänger (STB) weitergeleitet werden, durch Vergleich der Zugangsbedingungen mit Zugangsberechtigungen, die aus einer Zugangsberechtigungs-Datenbank abgerufen wurden, gespeichert in einem Speicher des Empfängers (STB) oder in einem Speicher der sekundären sicheren Vorrichtung (SD2), wobei die verschlüsselten Audioinhaltsdaten (AU)_{KS} bei einer erfolgreichen Überprüfung der Zugangsbedingungen entschlüsselt werden.

15. System nach Anspruch 12, **dadurch gekennzeichnet, dass** die primäre und die sekundäre sichere Vorrichtung (SD1, SD2) die Form von Smartcards haben, implementiert auf einer einzelnen physischen Sicherheitsvorrichtung, genannt Zugangsberechtigungsmodul, (CAM), die örtlich mit dem Empfänger (STB) verbunden ist.

## Revendications

1. Méthode de traitement d'un flux de données numériques (ST) comprenant des données de contenu vidéo (VI)_{CW} chiffrées avec un premier algorithme (A1) utilisant au moins un mot de contrôle (CW), des données de contenu audio (AU)_{KS} encryptées avec un deuxième algorithme secret (A2) utilisant une clé de système (KS) et ledit flux de données numériques (ST) comprenant en outre des messages de contrôle encryptés (ECM) comprenant au moins un des mots de contrôle (CW), le flux de données numériques (ST) entrant dans un récepteur (STB) comprenant un dispositif de déchiffrement de vidéo (VDD), le récepteur (STB) étant couplé à un dispositif sécurisé primaire (SD1) et un dispositif sécurisé secondaire (SD2), la méthode comprenant les étapes de:
- extraction par le récepteur (STB) d'un message de contrôle (ECM) du flux de données numériques (ST),
- transmission au dispositif sécurisé primaire (SD1) du message de contrôle extrait (ECM), où le dispositif sécurisé primaire (SD1):
- décrypte le message de contrôle (ECM),
- obtient le mot de contrôle (CW) du message de contrôle (ECM) et
- transmet le mot de contrôle (CW) au récepteur (STB),
- déchiffrement des données de contenu vidéo (VI)_{CW} avec le premier algorithme (A1) en utilisant le mot de contrôle (CW),
la méthode est **caractérisée en ce qu'**elle comprend en outre les étapes de
- transmission au dispositif sécurisé secondaire (SD2) des données de contenu audio encryptées (AU)_{KS}, où le dispositif sécurisé secondaire (SD2):
- décrypte les données de contenu audio (AU)_{KS} avec le deuxième algorithme secret (A2) en utilisant la clé de système (KS), le deuxième algorithme secret (A2) et la clé de système (KS) étant précédemment implémentés dans le dispositif sécurisé secondaire (SD2),
- ajoute un tatouage (WM) sur les données de contenu audio décryptées (AU') et
- retourne les données de contenu audio décryptées tatouées (AU'_{WM}) au récepteur (STB),
- émission par le récepteur (STB) des données de contenu vidéo déchiffrées (VI) et des données de contenu audio décryptées tatouées (AU'_{WM}) à un dispositif d'affichage (TV).

2. Méthode selon la revendication 1 **caractérisée en ce que** le message de contrôle (ECM) comprend des conditions d'accès en plus du mot de contrôle (CW), le dispositif sécurisé primaire (SD1) vérifie les conditions d'accès reçues du message de contrôle (ECM) en comparant les conditions d'accès avec des droits d'accès récupérés d'une base de données de droits d'accès stockée dans une mémoire du récepteur (STB) ou dans une mémoire du dispositif sécurisé primaire (SD1), le mot de contrôle (CW) étant obtenu après une vérification réussie des conditions d'accès.

3. Méthode selon la revendication 1 ou 2 **caractérisée en ce que** le dispositif sécurisé secondaire (SD2) vérifie les conditions d'accès envoyées par le récepteur (STB) en comparant les conditions d'accès avec des droits d'accès récupérés d'une base de données de droits d'accès stockée dans une mémoire du récepteur (STB) ou dans une mémoire du dispositif sécurisé secondaire (SD2), les données de contenu audio encryptées (AU)_{KS} étant décryptées après une vérification réussie des conditions d'accès.

4. Méthode selon la revendication 3 **caractérisée en ce que** le message de contrôle (ECM) comprend des conditions d'accès distinctes pour les données de contenu vidéo (VI) et pour les données de contenu audio (AU).

5. Méthode selon la revendication 3 **caractérisée en ce que** le récepteur (STB) convertit les conditions d'accès reçues du message de contrôle (ECM) en un format acceptable par le dispositif sécurisé secondaire (SD2) avant de les envoyer au dispositif sécurisé secondaire (SD2).

6. Méthode selon l'une quelconque des revendications 1 à 5 **caractérisée en ce que** le flux de données numériques (ST) comprend des messages de contrôle (ECM) contenant la clé de système (KS) ou des informations nécessaires pour la génération de la clé de système (KS) par le dispositif sécurisé secondaire (SD2), les messages de contrôle (ECM), ignorés par le dispositif sécurisé primaire (SD1), étant traités seulement par le dispositif sécurisé secondaire (SD2) pour obtenir la clé de système (KS).

7. Méthode selon l'une quelconque des revendications 1 à 5 **caractérisée en ce que** le flux de données numériques (ST) comprend des messages de contrôle (ECM) contenant le mot de contrôle (CW) et la clé de système (KS) ou des informations pour générer la clé de système (KS), le message de contrôle (ECM) étant envoyé par le récepteur (STB) aux deux dispositifs sécurisés (SD1, SD2) pour l'extraction respectivement du mot de contrôle (CW) et de la clé de système (KS).

8. Méthode selon l'une quelconque des revendications 1 à 5 **caractérisée en ce que** le flux de données numériques (ST) comprend des messages de gestion (EMM) qui fournissent, en plus des mises à jour de droits, la clé de système (KS) au dispositif sécurisé secondaire (SD2) ou des informations nécessaires pour générer la clé de système (KS), et des informations ou des paramètres concernant le deuxième algorithme de décryption secret (A2).

9. Méthode selon l'une quelconque des revendications 1 à 5 **caractérisée en ce que** la clé de système (KS) et le deuxième algorithme de décryption secret (A2) sont intégrés dans le dispositif sécurisé secondaire (SD2) lors de la fabrication du dispositif (SD2) pendant une étape de personnalisation.

10. Méthode selon l'une quelconque des revendications 1 à 9, **caractérisée en ce que** les données de contenu audio décryptées tatouées (AU'_{WM}) sont réencryptées par le dispositif sécurisé secondaire (SD2) avec une clé (K_{STB}) et un algorithme unique connu seulement par un récepteur déterminé (STB), les données de contenu audio décryptées tatouées réencryptées (AU'_{WM})K_{STB} étant retournées au récepteur (STB) par le dispositif sécurisé secondaire (SD2).

11. Méthode selon la revendication 10 **caractérisée en ce que** la clé unique (K_{STB}) peut être déterminée en fonction d'identifiants du dispositif sécurisé secondaire (SD2) et du récepteur (STB) pendant la première connexion du récepteur (STB) au dispositif sécurisé secondaire (SD2) où la clé (K_{STB}) stockée soit dans une mémoire du récepteur (STB), soit dans une mémoire du dispositif sécurisé secondaire (SD2) est mutuellement échangée.

12. Système de traitement d'un flux de données numériques (ST), le système comprenant un récepteur (STB) ayant un dispositif de déchiffrement de vidéo (VDD), le récepteur (STB) étant couplé à un dispositif sécurisé primaire (SD1) et un dispositif sécurisé secondaire (SD2), le flux de données numériques (ST) comprenant des données de contenu vidéo (VI) chiffrées avec un premier algorithme (A1) utilisant un mot de contrôle (CW), des données de contenu audio (AU) encryptées avec un deuxième algorithme secret (A2) utilisant une clé de système (KS) et des messages de contrôle encryptés (ECM) correspondants comprenant le mot de contrôle (CW),
le récepteur (STB) est configuré pour recevoir le flux de données numériques (ST) et pour extraire un message de contrôle (ECM) dudit flux de données numériques (ST) et pour transmettre au dispositif sécurisé primaire (SD1) le message de contrôle extrait (ECM),
le dispositif sécurisé primaire (SD1) est configuré pour décrypter le message de contrôle (ECM) et pour obtenir le mot de contrôle (CW) du message de contrôle (ECM), et pour transmettre le mot de contrôle (CW) au dispositif de déchiffrement de vidéo (VDD) du récepteur (STB),
le système est **caractérisé en ce que**
le dispositif sécurisé secondaire (SD2) étant configuré pour recevoir les données de contenu audio encryptées (AU)_{KS} du récepteur (STB) comprend un dispositif de décryption (DEC) configuré pour décrypter les données de contenu audio (AU) avec le deuxième algorithme secret (A2) en utilisant la clé de système (KS) précédemment implémentée dans le dispositif sécurisé secondaire (SD2) et un module de tatouage (WM) configuré pour ajouter un tatouage aux données de contenu audio décryptées (AU') et pour retourner les données de contenu audio décryptées tatouées AU'_{WM} au récepteur (STB), le récepteur (STB) étant configuré en outre transmettre à un dispositif d'affichage (TV) les données de contenu vidéo déchiffrées (VI) et les données de contenu audio décryptées tatouées AU'_{WM} fournies par le dispositif sécurisé secondaire (SD2).

13. Système selon la revendication 12 **caractérisé en ce que** le message de contrôle (ECM) comprend des conditions d'accès en plus du mot de contrôle (CW), le dispositif sécurisé primaire (SD1) est configuré en outre pour vérifier les conditions d'accès reçues du message de contrôle (ECM) en comparant les conditions d'accès avec des droits d'accès récupérés d'une base de données de droits d'accès stockée dans une mémoire du récepteur (STB) ou dans une mémoire du dispositif sécurisé primaire (SD1), le mot de contrôle (CW) étant obtenu après une vérification réussie des conditions d'accès.

14. Système selon la revendication 12 ou 13 **caractérisé en ce que** le dispositif sécurisé secondaire (SD2) est configuré en outre pour vérifier les conditions d'accès envoyées par le récepteur (STB) en comparant les conditions d'accès avec des droits d'accès récupérés d'une base de données de droits d'accès stockée dans une mémoire du récepteur (STB) ou dans une mémoire du dispositif sécurisé secondaire (SD2), les données de contenu audio encryptées (AU)_{KS} étant décryptées après une vérification réussie des conditions d'accès.

15. Système selon la revendication 12, **caractérisé en ce que** les dispositifs sécurisés primaire et secondaire (SD1, SD2) sont sous la forme de cartes à puce implémentées sur un seul dispositif de sécurité physique appelé module d'accès conditionnel (CAM) connecté localement au récepteur (STB).
